# EUROPEAN PATENT APPLICATION

(11) **EP 1 489 491 A1**
(43) Date of publication of application: **22.12.2004**
(21) Application number: 03291502.7
(22) Date of filing: 19.06.2003
(51) Int. Cl.: G06F 9/318, G06F 11/34

(54) **Dynamically changing the semantic of an instruction**

(71) Applicant: Texas Instruments Incorporated, Dallas, Texas 75251 (US); Texas Instruments France, 06271 Villeneuve Loubet Cedex, Nice (FR)
(72) Inventor: Chavel, Gerard, Residence du Valbosquet'20, 06600 Antibes (FR); Lasserre, Serge, 83600 Frejus (FR); D'inverno, Dominique, 06270 Villeneuve-Loubet (FR); Kuusela, Maija, 06370 Mouans Sartoux (FR); Cabilic, Gilbert, 35530 Brece (FR); Lesot, Jean-Philippe, 35370 Estrelles (FR); Banatre, Michel, 35111 La Fresnais (FR); Routeau, Jean-Paul, 35235 Thorigne-Fouillard (FR); Majoul, Salam, 35000 Rennes (FR); Parain, Frederic, 35000 Rennes (FR)
(74) Representative: Holt, Michael

(57) **Abstract**

A technique comprises receiving an instruction and dynamically changing the instruction's semantic based on programmable information that is separate from the instruction. The change in semantic may comprise the inclusion of monitoring code that determines a performance characteristic associated with the instruction or a change in the instruction's operation (e.g., the inclusion of read or write barrier operations to support a garbage collector).

## Description

### TECHNICAL FIELD OF THE INVENTION

The present invention relates generally to processors and more particularly to dynamically modifying the semantic of an instruction.

### BACKGROUND INFORMATION

As is well known, a compiler generally compiles code (e.g., Java bytecode) into machine code. Java is desirable for a wide variety of applications. Further enhancements to accelerate Java code execution is desirable.

### BRIEF SUMMARY

In some embodiments of the invention, a technique comprises receiving an instruction and dynamically changing the instruction's semantic based on programmable information that is separate from the instruction. The change in semantic may comprise the inclusion of monitoring code that determines a performance characteristic associated with the instruction or a change in the instruction's operation (e.g., the inclusion of read or write barrier operations to support a garbage collector).

### NOTATION AND NOMENCLATURE

Certain terms are used throughout the following description and claims to refer to particular system components. As one skilled in the art will appreciate, various companies may refer to a component by different names. This document does not intend to distinguish between components that differ in name but not function. In the following discussion and in the claims, the terms "including" and "comprising" are used in an open-ended fashion, and thus should be interpreted to mean "including, but not limited to...". Also, the term "couple" or "couples" is intended to mean either an indirect or direct connection. Thus, if a first device couples to a second device, that connection may be through a direct connection, or through an indirect connection via other devices and connections.

### BRIEF DESCRIPTION OF THE DRAWINGS

For a more detailed description of the preferred embodiments of the present invention, reference will now be made to the accompanying drawings, wherein:
Figure 1 shows a diagram of a system in accordance with preferred embodiments of the invention and including a Java Stack Machine ("JSM") and a Main Processor Unit ("MPU") ;
Figure 2 shows a block diagram of the JSM of Figure 1 in accordance with preferred embodiments of the invention;
Figure 3 shows various registers used in the JSM of Figures 1 and 2;
Figure 4 illustrates the preferred operation of the JSM to include "micro-sequences;"
Figure 5 illustrates a preferred embodiment of replacing an instruction with a micro-sequence that includes monitoring code; and
Figure 6 depicts an exemplary embodiment of the system described herein.

### DETAILED DESCRIPTION OF THE PREFERRED EMBODIMENTS

The following discussion is directed to various embodiments of the invention. Although one or more of these embodiments may be preferred, the embodiments disclosed should not be interpreted, or otherwise used, as limiting the scope of the disclosure, including the claims, unless otherwise specified. In addition, one skilled in the art will understand that the following description has broad application, and the discussion of any embodiment is meant only to be exemplary of that embodiment, and not intended to intimate that the scope of the disclosure, including the claims, is limited to that embodiment.

The subject matter disclosed herein is generally directed to dynamically replacing instructions (i.e., during run-time, on-the-fly) with an alternate sequence of instructions that changes the semantic of the instruction. This process may include adding monitoring code within the instruction execution or adding or modifying the operation performed by the instruction itself. When adding monitoring code, the monitoring code generally determines a performance characteristic pertaining to the replaced instruction such as frequency of execution or other type of data used by the monitoring function. This technique effectively permits any instruction, including those instructions that are otherwise executed directly by a processor, to be instrumented with monitoring code. In other embodiments, this semantic modification technique may be applied to a "garbage" collector. In accordance with the preferred embodiment, this technique may be implemented in a programmable electronic device such as a processor. A suitable processor will be described below followed by a description of the preferred technique for modifying an instruction to include monitoring code.

The processor described herein is particularly suited for executing Java™ Bytecodes or comparable, code. As is well known, Java is particularly suited for embedded applications. Java is a relatively "dense" language meaning that on average each instruction may perform a large number of functions compared to various other programming languages. The dense nature of Java is of particular benefit for portable, battery-operated devices that preferably include as little memory as possible to save space and power. The reason, however, for executing Java code is not material to this disclosure or the claims that follow. Further, the processor advantageously includes one or more features that permit the execution of the Java code to be accelerated. While Java is used to describe the preferred embodiment of the invention, this disclosure and claims are not limited to Java.

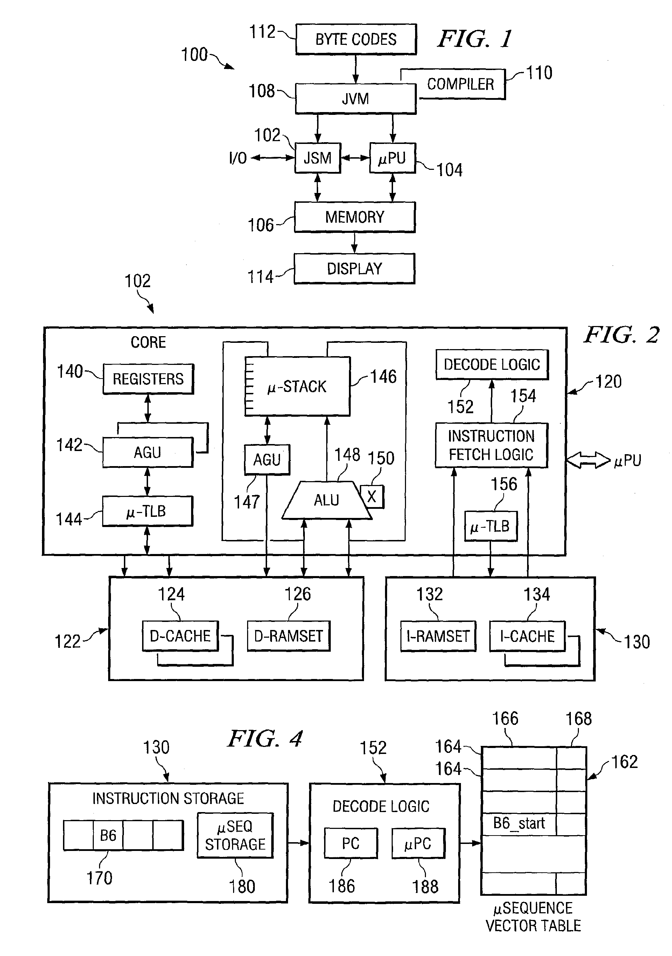

Referring now to Figure 1, a system 100 is shown in accordance with a preferred embodiment of the invention. As shown, the system includes at least two processors 102 and 104. Processor 102 is referred to for purposes of this disclosure as a Java Stack Machine ("JSM") and processor 104 may be referred to as a Main Processor Unit ("MPU"). System 100 may also include memory 106 coupled to both the JSM 102 and MPU 104 and thus accessible by both processors. At least a portion of the memory 106 may be shared by both processors meaning that both processors may access the same shared memory locations. Further, if desired, a portion of the memory 106 may be designated as private to one processor or the other. System 100 also includes a Java Virtual Machine ("JVM") 108, compiler 110, and a display 114. The MPU 104 preferably includes an interface to one or more input/output ("I/O") devices such as a keypad to permit a user to control various aspects of the system 100. In addition, data streams may be received from the I/O space into the JSM 102 to be processed by the JSM 102. Other components (not specifically shown) may be included as desired for various applications.

As is generally well known, Java code comprises a plurality of "bytecodes" 112. Bytecodes 112 may be provided to the JVM 108, compiled by compiler 110 and provided to the JSM 102 and/or MPU 104 for execution therein. In accordance with a preferred embodiment of the invention, the JSM 102 may execute at least some, and generally most, of the Java bytecodes. When appropriate, however, the JSM 102 may request the MPU 104 to execute one or more Java bytecodes not executed or executable by the JSM 102. In addition to executing Java bytecodes, the MPU 104 also may execute non-Java instructions. The MPU 104 also hosts an operating system ("O/S") (not specifically shown) which performs various functions including system memory management, the system task management that schedules the JVM 108 and most or all other native tasks running on the system, management of the display 114, receiving input from input devices, etc. Without limitation, Java code may be used to perform any one of a variety of applications including multimedia, games or web based applications in the system 100, while non-Java code, which may comprise the O/S and other native applications, may still run on the system on the MPU 104.

The JVM 108 generally comprises a combination of software and hardware. The software may include the compiler 110 and the hardware may include the JSM 102. The JVM may include a class loader, bytecode verifier, garbage collector, and a bytecode interpreter loop to interpret the bytecodes that are not executed on the JSM processor 102.

In accordance with preferred embodiments of the invention, the JSM 102 may execute at least two instruction sets. One instruction set may comprise standard Java bytecodes. As is well-known, Java is a stack-based programming language in which instructions generally target a stack. For example, an integer add ("IADD") Java instruction pops two integers off the top of the stack, adds them together, and pushes the sum back on the stack. A "simple" Bytecode instruction is generally one in which the JSM 102 may perform an immediate operation either in a single cycle (e.g., an "iadd" instruction) or in several cycles (e.g., "dup2_x2"). A "complex" Bytecode instruction is one in which several memory accesses may be required to be made within the JVM data structure for various verifications (e.g., NULL pointer, array boundaries). As will be described in further detail below, one or more of the complex Bytecodes may be replaced by a "micro-sequence" comprising various other instructions.

Another instruction set executed by the JSM 102 may include instructions other than standard Java instructions. In accordance with at least some embodiments of the invention, the other instruction set may include register-based and memory-based operations to be performed. This other instruction set generally complements the Java instruction set and, accordingly, may be referred to as a complementary instruction set architecture ("C-ISA"). By complementary, it is meant that a complex Java Bytecode may be replaced by a "micro-sequence" comprising C-ISA instructions. A micro-sequence also may include one or more standard Java Bytecode instructions. The execution of Java may be made more efficient and run faster by replacing some sequences of Bytecodes by preferably shorter and more efficient sequences of C-ISA instructions. The two sets of instructions may be used in a complementary fashion to obtain satisfactory code density and efficiency. As such, the JSM 102 generally comprises a stack-based architecture for efficient and accelerated execution of Java bytecodes combined with a register-based architecture for executing register and memory based C-ISA instructions. Both architectures preferably are tightly combined and integrated through the C-ISA. Because various of the data structures described herein are generally JVM-dependent and thus may change from one JVM implementation to another, the software flexibility of the micro-sequence provides a mechanism for various JVM optimizations now known or later developed.

Figure 2 shows an exemplary block diagram of the JSM 102. As shown, the JSM includes a core 120 coupled to data storage 122 and instruction storage 130. The core may include one or more components as shown. Such components preferably include a plurality of registers 140, three address generation units ("AGUs") 142, 147, micro-translation lookaside buffers (micro-TLBs) 144, 156, a multi-entry micro-stack 146, an arithmetic logic unit ("ALU") 148, a multiplier 150, decode logic 152, and instruction fetch logic 154. In general, operands may be retrieved from data storage 122 or from the micro-stack 146 and processed by the ALU 148, while instructions may be fetched from instruction storage 130 by fetch logic 154 and decoded by decode logic 152. The address generation unit 142 may be used to calculate addresses based, at least in part, on data contained in the registers 140. The AGUs 142 may calculate addresses for C-ISA instructions. The AGU 147 couples to the micro-stack 146 and may manage overflow and underflow conditions in the micro-stack preferably in parallel. The micro-TLBs 144, 156 generally perform the function of a cache for the address translation and memory protection information bits that are preferably under the control of the operating system running on the MPU 104.

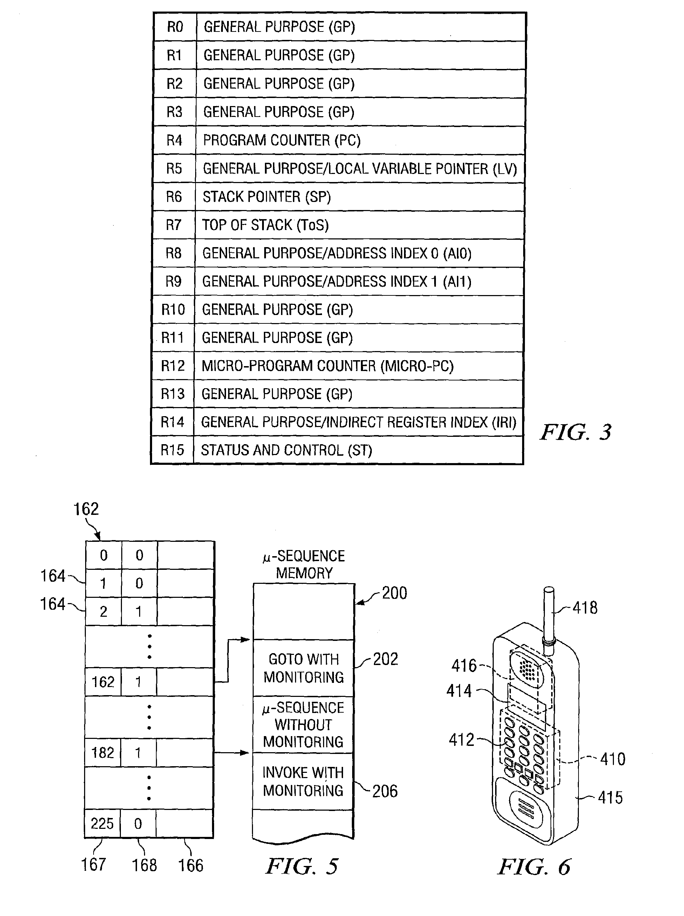

Referring now to Figure 3, the registers 140 may include 16 registers designated as R0-R15. Registers R0-R3, R5, R8-R11 and

R13-R14 may be used as general purposes ("GP") registers usable for any purpose by the programmer. Other registers, and some of the GP registers, may be used for specific functions. For example, registers R4 and R12 may be used to store two program counters. Register R4 preferably is used to store the program counter ("PC") and register R12 preferably is used to store a micro-program counter ("micro-PC"). The use of the PC and micro-PC will be explained in greater detail below. In addition to use as a GP register, register R5 may be used to store the base address of a portion of memory in which Java local variables may be stored when used by the current Java method. The top of the micro-stack 146 can be referenced by the values in registers R6 and R7. The top of the micro-stack has a matching address in external memory pointed to by register R6. The values contained in the micro-stack are the latest updated values, while their corresponding values in external memory may or may not be up to date. Register R7 provides the data value stored at the top of the micro-stack. Registers R8 and R9 may also be used to hold the address index 0 ("AI0") and address index 1 ("AI1"). Register R14 may also be used to hold the indirect register index ("IRI"). Register R15 may be used for status and control of the JSM 102. At least one bit (called the "Micro-Sequence-Active" bit) in status register R15 is used to indicate whether the JSM 102 is executing a simple instruction or a complex instruction through a micro-sequence. This bit controls in particular, which program counter is used R4 (PC) or R12 (micro-PC) to fetch the next instruction as will be explained below.

Referring again to Figure 2, as noted above, the JSM 102 is adapted to process and execute instructions from at least two instruction sets, at least one having instructions from a stack-based instruction set (e.g., Java). The stack-based instruction set may include Java Bytecodes. Unless empty, Java Bytecodes may pop data from and push data onto the micro-stack 146. The micro-stack 146 preferably comprises the top n entries of a larger stack that is implemented in data storage 122. The micro-stack 146 preferably comprises a plurality of gates in the core 120 of the JSM 102. By implementing the micro-stack 146 in gates (e.g., registers) in the core 120 of the processor 102, access to the data contained in the micro-stack 146 is generally very fast, although any particular access speed is not a limitation on this disclosure.

The ALU 148 adds, subtracts, and shifts data. The multiplier 150 may be used to multiply two values together in one or more cycles. The instruction fetch logic 154 generally fetches instructions from instruction storage 130. The instructions may be decoded by decode logic 152. Because the JSM 102 is adapted to process instructions from at least two instruction sets, the decode logic 152 generally comprises at least two modes of operation, one mode for each instruction set. As such, the decode logic unit 152 may include a Java mode in which Java instructions may be decoded and a C-ISA mode in which C-ISA instructions may be decoded.

The data storage 122 generally comprises data cache ("D-cache") 124 and data random access memory ("D-RAMset") 126. Reference may be made to co-pending applications U.S. Serial nos. 09/591,537 filed June 9, 2000 (atty docket TI-29884), 09/591,656 filed June 9, 2000 (atty docket TI-29960), and 09/932,794 filed August 17, 2001 (atty docket TI-31351), all of which are incorporated herein by reference. The stack (excluding the micro-stack 146), arrays and non-critical data may be stored in the D-cache 124, while Java local variables, critical data and non-Java variables (e.g., C, C++) may be stored in D-RAM 126. The instruction storage 130 may comprise instruction RAM ("I-RAMset") 132 and instruction cache ("I-cache") 134. The I-RAMset 132 may be used for "complex" micro-sequenced Bytecodes or micro-sequences or predetermined sequences of code, as will be described below. The I-cache 134 may be used to store other types of Java bytecode and mixed Java/C-ISA instructions.

Figure 4 illustrates the operation of the JSM 102 to replace Java Bytecodes with micro-sequences. Figure 4 shows some, but not necessarily all, components of the JSM. In particular, the instruction storage 130, the decode logic 152, and a micro-sequence vector table 162 are shown. The decode logic 152 accesses the instruction storage 130 and the micro-sequence vector table 162. In general and as described above, the decode logic 152 receives instructions (e.g., instructions 170) from instruction storage 130 via instruction fetch logic 154 (Figure 2) and decodes the instructions to determine the type of instruction for subsequent processing and execution. In accordance with the preferred embodiments, the JSM 102 either executed the Bytecode from instructions 170 or replaces a Bytecode from instructions 170 with a micro-sequence as described below.

The micro-sequence vector table 162 may be implemented in the decode logic 152 or as separate logic in the JSM 102. The micro-sequence vector table 162 preferably includes a plurality of entries 164. The entries 164 may include one entry for each Bytecode that the JSM may receive. For example, if there are a total of 256 Bytecodes, the micro-sequence vector table 162 preferably comprises at least 256 entries. Each entry 164 preferably includes at least two fields-a field 166 and an associated field 168. Field 168 may comprise a single configuration bit that indicates whether the instruction 170 is to be directly executed or whether the associated field 166 contains a reference to a micro-sequence. For example, a bit 168 having a value of "0" may indicate the field 166 is invalid and thus, the corresponding Bytecode from instructions 170 is directly executable by the JSM. Bit 168 having a value of "1" may indicate that the associated field 166 contains a reference to a micro-sequence.

If the bit 168 indicates the associated field 166 includes a reference to a micro-sequence, the reference may comprise the full starting address in instruction storage 130 of the micro-sequence or a part of the starting address that can be concatenated with a base address that may be programmable in the JSM. In the former case, field 166 may provide as many address bits as are required to access the full memory space. In the latter case, a register within the JSM registers 140, or preferably within a JSM configuration register accessible through an indirect addressing mechanism using the IRI register, is programmed to hold the base address and the vector table 162 may supply only the offset to access the start of the micro-sequence. Most or all JSM internal registers 140 and any other registers preferably are accessible by the main processor unit 104 and, therefore, may be modified by the JVM as necessary. Although not required, this latter addressing technique may be preferred to reduce the number of bits needed within field 166. At least a portion 180 of the instruction 130 may be allocated for storage of micro-sequences and thus the starting address may point to a location in micro-sequence storage 130 at which a particular micro-sequence can be found. The portion 180 may be implemented in I-RAM 132 shown above in Figure 2.

Although the micro-sequence vector table 162 may be loaded and modified in accordance with a variety of techniques, the following discussion includes a preferred technique. The vector table 162 preferably comprises a JSM resource that is addressable via register R14 functioning as an indirect register index ("IRI") register as mentioned above. A single entry 164 or a block of entries within the vector table 162 may be loaded by information from the data cache 124 (Figure 2). When loading multiple entries (e.g., all of the entries 164) in the table 162, a repeat loop of instructions may be executed. Prior to executing the repeat loop, a register (e.g., R0) preferably is loaded with the starting address of the block of memory containing the data to load into the table. Another register (e.g., R1) preferably is loaded with the size of the block to load into the table. Register R14 is loaded with the value that corresponds to the first entry in the vector table that is to be updated/loaded. An "I" bit in the status register R15 preferably is set to indicate that the register R14 is intended for use as an IRI register. Otherwise, the "I" bit specifies that register R14 is to be used as a general purpose register.

The repeated instruction loop preferably comprises two instructions that are repeated n times. The value n preferably is the value stored in register R1. The first instruction in the loop preferably performs a load from the start address of the block (R0) to the first entry in the vector table 162. The second instruction in the loop preferably adds an "immediate" value to the block start address. The immediate value may be "2" if each entry in the vector table is 16 bits wide. The loop repeats itself to load the desired portions of the total depending on the starting address.

In operation, the decode logic 152 uses a Bytecode from instructions 170 as an index into micro-sequence vector table 162. Once the decode logic 152 locates the indexed entry 164, the decode logic 152 examines the associated bit 168 to determine whether the Bytecode is to be replaced by a micro-sequence. If the bit 168 indicates that the Bytecode can be directly processed and executed by the JSM, then the instruction is so executed. If, however, the bit 168 indicates that the Bytecode is to be replaced by a micro-sequence, then the decode logic 152 preferably changes this instruction into a "NOP" and sets the micro-sequence-active bit (described above) in the status register R15. In another embodiment, the JSM's pipe may be stalled to fetch and replace this micro-sequenced instruction by the first instruction of the micro-sequence. Changing the micro-sequenced Bytecode into a NOP while fetching the first instruction of the micro-sequence permits the JSM to process multi-cycle instructions that are further advanced in the pipe without additional latency. The micro-sequence-active bit may be set at any suitable time such as when the micro-sequence enters the JSM execution stage (not specifically shown).

As described above, the JSM 102 implements two program counters-the PC (register R4) and the micro-PC (register R12). In accordance with a preferred embodiment, one of these two program counters is the active program counter used to fetch and decode instructions. The PC 186 stored in register R4 may be the currently active program counter when the decode logic 152 encounters a Bytecode to be replaced by a micro-sequence. Setting the status register's micro- sequence-active bit causes the micro-program counter 188 (register R12) to become the active program counter instead of the program counter 186. Also, the contents of the field 166 associated with the micro-sequenced Bytecode preferably is loaded into the micro-PC 188. At this point, the JSM 102 is ready to begin fetching and decoding the instructions comprising the micro-sequence. At or about the time the decode logic begins using the micro-PC 188 from register R12, the PC 186 preferably is incremented by a suitable value to point the PC to the next instruction following the Bytecode that is replaced by the micro-sequence. In at least some embodiments, the micro-sequence-active bit within the status register R15 may only be changed when the first instruction of the micro-sequence enters the execute phase of JSM 102 pipe. The switch from PC 186 to the micro-PC 188 preferably is effective immediately after the micro-sequenced instruction is decoded, thereby reducing the latency.

The micro-sequence may end with a predetermined value or Bytecode from the C-ISA called "RtuS" (return from micro-sequence) that indicates the end of the sequence. This C-ISA instruction causes a switch from the micro-PC (register R12) to the PC (register R4) upon completion of the micro-sequence. Preferably, the PC 186 previously was incremented, as discussed above, so that the value of the PC 186 points to the next instruction to be decoded. The instruction may have a delayed effect or an immediate effect depending on the embodiment that is implemented. In embodiments with an immediate effect, the switch from the micro-PC to the PC is performed immediately after the instruction is decoded and the instruction after the RtuS instruction is the instruction pointed to by the address present in the PC 186.

As discussed above, one or more Bytecodes may be replaced with a micro-sequence or group of other instructions. Such replacement instructions may comprise any suitable instructions for the particular application and situation at hand. At least some such suitable instructions are disclosed in co-pending application entitled "Mixed Stack-Based RISC Processor," (atty docket no. TI-35433), incorporated herein by reference.

Referring now to Figure 5, a representation of a micro-sequence vector table 162 is shown as comprising a plurality of entries 164 and fields 166 and 168 as before. A field 167 also is shown as comprising a reference to a Bytecode. The Bytecodes may range in value from 0 to 255. Field 167 may be expressly included in the vector table 162 or the contents of the field 167 may be implied via an index mechanism. For example, Bytecode number 2 may represent an index or offset, relative to a reference location (e.g., Bytecode 0) to identify a target entry in the vector table.

Preferably, the vector table 162 is programmed so that at least one and generally a plurality of the Bytecodes are replaced by a micro-sequence from micro-sequence memory 200. Micro-sequence memory 200 may be implemented as part of the instruction storage 130 and preferably in the I-RAMset 132. In accordance with a preferred embodiment of the invention, one or more Bytecodes may be replaced by a micro-sequence that includes monitoring code. In the example of Figure 5, Bytecodes 162 ("GOTO") and 182 ("INVOKE") are replaced by micro-sequences located in micro-sequence memory at 202 and 206. Each of these micro-sequences preferably includes one or more instructions, such C-ISA instructions, that perform the actions required to perform the instruction being replaced as well as one or more instructions that monitor a performance characteristic associated with the instruction being replaced. In the example of the GOTO bytecode, the GOTO bytecode is also part of the sequence of instructions 202 instrumented for monitoring that replaces the GOTO executed directly as shown in Figure 5. The instance of the GOTO included within the sequence of instructions 202 replacing the original bytecode is executed directly by the decode logic 152. In other embodiments, the micro-sequence may only include monitoring code and thus perform no function other than to monitor an instruction. Having a micro-sequence that only includes monitoring code may be desirable to dynamically instrument an instruction that otherwise is executed directly by a processor. Further, an instruction that is replaced with a micro-sequence that includes monitoring code may be replaced, instead, by a micro-sequence that does not have monitoring code.

The monitoring code included in a micro-sequence generally determines one or more performance characteristics associated with the instruction that is replaced by the micro-sequence. The monitoring code may comprise a counter instruction that increments each time the replaced instruction is executed to keep track of the total number of times an instruction is executed. In other embodiments, the monitoring code may be usable to keep track of the frequency with which the replaced instruction is executed, for example, in units of number of executions per unit of time or number of executions per unit of total number of instruction executions, execution time and memory usage. The performance characteristics determined by an instrumented instruction may be used in any way desired.

In accordance with various embodiments of the invention, the micro-sequence vector table 162 is dynamically programmable. Being able to dynamically program the vector table 162 permits the system 100 to change which instructions are instrumented based on input from a user or based on the performance characteristics associated with other monitored instructions. For example, an instruction that currently whose configuration bit 168 specifies that the instruction is not to be replaced by a micro-sequence or is to be replaced by a micro-sequence that does not include monitoring code may be dynamically reprogrammed to be replaced by a micro-sequence having monitoring code. This dynamic change may be implemented by changing the instruction's configuration bit and possibly changing the field 166 to point to the location of the new micro-sequence.

In general, an instruction is received by, for example, the decode logic 152. Further, the system dynamically replaces the instruction by a sequence of instructions that includes monitoring code if an associated programmable configuration bit (e.g., the bit or field 168) indicates that the instruction is to be replaced. This technique permits "hot spots" to be detected even on native machine instructions such as directly executable bytecodes. A hot spot is a frequently executed section of code. This technique is applied within dynamic compilers also called dynamic adaptive compilers ("DAC"). As such, the JSM 102 can be combined with many compiler techniques to further improve the performance execution of a program.

Another example of applying the above-described dynamic semantic change of an instruction relates to the implementation of a garbage collector on a system capable of running multiple processes concurrently such as the system 100 described in Figure 1 above. In this context, the JSM 102 runs Java applications while the MPU 104 runs other tasks, one of which may be a garbage collection task.

To enable concurrency between an application and a "garbage" collector (which reclaims previously allocated memory), an incremental garbage collector (generational or mark and sweep) is based on the realization of a read or write barrier. During the collection process, the garbage collector implements a tracing from object roots to identify all objects that are used by an application. The tracing uses reference fields contained inside objects. Due to the concurrency, an incremental garbage permits the application to make access or change of reference fields contained in the objects. During the execution of a garbage collector, the garbage collector is made aware of any object application context change. A read barrier is an action performed when the application makes a read access to a reference field of an object. A write barrier is an action performed by an application when making a write access to a reference field of an object. Thus, during the garbage step, and only during that step, a specific action is added before accessing the object field according to the access of the field to make a barrier (read access for read barriers, write access for write barriers). These barriers can generate a temporary halt of the application or insert the object reference into a barrier list. These actions are defined by the garbage collector itself.

Thus, during the garbage collection step, actions of Bytecodes making accesses to reference object fields are changed via the getfield and putfield opcodes. Moreover, In the case of a Java accelerator such as the JSM 102, the putfield_quick and the getfield_quick opcode are hard-coded. As such, during garbage collection and if a write barrier is needed, the getfield_quick opcode semantic is changed to implement the write barrier if the field is a reference field and then makes the access to the object field reference.

With the dynamic instruction modification technique described above, two different configurations can be used for the opcodes. In the first configuration, the getfield_quick is a hard-coded opcode. In the second configuration, a micro-sequence preferably replaces the getfield_quick. This micro-sequence still uses the hard-coded version of the getfield_quick, but contains the write barrier instrumentation. In this way, any or all of the following features are realized: there is no execution overhead associated when the garbage collector is not running, the getfield_quick hard-coded Bytecode can be used even with a write barrier, the hardware is not dependent on a software algorithm that could change in the future or according to user needs, and if a hard-coded opcode changes its semantics, it is still possible to use the hardware using software micro-sequences.

System 100 may be implemented as a mobile cell phone such as that shown in Figure 6. As shown, the mobile communication device includes an integrated keypad 412 and display 414. The JSM processor 102 and MPU processor 104 and other components may be included in electronics package 410 connected to the keypad 412, display 414, and radio frequency ("RF") circuitry 416. The RF circuitry 416 may be connected to an antenna 418.

While the preferred embodiments of the present invention have been shown and described, modifications thereof can be made by one skilled in the art without departing from the spirit and teachings of the invention. The embodiments described herein are exemplary only, and are not intended to be limiting. Many variations and modifications of the invention disclosed herein are possible and are within the scope of the invention. Accordingly, the scope of protection is not limited by the description set out above. Each and every claim is incorporated into the specification as an embodiment of the present invention.

## Claims

1. A method, comprising:
receiving an instruction; and
dynamically changing an instruction's semantic based on programmable information that is separate from the instruction.

2. The method of claim 1 wherein dynamically changing the instruction's semantic comprises including monitoring code associated with the instruction.

3. The method of claim 1 wherein dynamically changing an instruction's semantic comprises replacing the instruction with a sequence of instructions that includes monitoring code.

4. The method of claim 1 wherein changing the instruction's semantic comprises reprogramming a vector table containing references to sequences of instructions associated with instructions whose semantics are to be changed.

5. The method of claim 2 wherein the monitoring code detects hotspots.

6. The method of claim 1 wherein the instruction causes an operation to be performed and dynamically changing the instruction's semantic comprises changing the operation caused by the instruction.

7. The method of claim 6 wherein changing the operation comprises adding a read or write barrier operation to a read or write reference to provide up-to-date information to a garbage collector.

8. A processor, comprising:
fetch logic that retrieves instructions from memory;
decode logic coupled to the fetch logic; and
a vector table accessible to the decode logic and
containing a plurality of entries, each entry corresponding to an instruction and having an associated configuration bit, the configuration bit specifies whether the associated instruction is to be replaced by an alternate sequence of instructions, and those entries whose configuration bit specifies that the associated instruction is to be replaced also include a pointer to the alternate sequence of instructions.

9. The processor of claim 8 wherein the alternate sequence of instructions comprises monitoring code detects hotspots.

10. The processor of claim 8 wherein an instruction to which a vector table entry corresponds causes an operation to be performed and wherein the alternate sequence of instructions comprises a different operation.

11. The processor of claim 10 wherein the different operation comprises a read or write barrier operation to a read or write reference to provide up-to-date information to a garbage collector.

12. The processor of claim 8 wherein a replaced instruction comprises a Java instruction that is directly executed by a processor without being interpreted.

13. The processor of claim 8 wherein the vector table is programmable.

14. The processor of claim 8 wherein an entry's configuration bit that currently specifies that the instruction associated with the entry is not to be replaced by an alternate sequence of instructions is dynamically programmable to specify that the instruction is to be replaced.

15. The processor of claim 8 wherein each vector table entry that currently specifies that the instruction associated with each such entry is replaced by an alternate sequence of instructions that do not include monitoring code is reprogrammable to specify that the associated instruction is to be replaced by an alternate sequence of instructions that includes monitoring code.

16. The processor of claim 15 wherein each such entry that is reprogrammable to specify that the associated instruction is to be replaced by an alternate sequence of instructions that includes monitoring code comprises a pointer and the pointer is dynamically programmable to point to the alternate sequence of instructions that includes monitoring code.

17. A processor, comprising:
fetch logic that retrieves instructions from memory;
decode logic coupled to the fetch logic, and
means for indicating whether an instruction is to be dynamically replaced by a sequence of instructions that includes monitoring code, the monitoring code determines a characteristic pertaining to the replaced instruction.

18. The processor of claim 17 wherein the characteristic comprises a characteristic selected from the group consisting of execution frequency, execution time, and memory usage.

19. The processor of claim 17 wherein the replaced instruction is an instruction that, if not replaced, would be executed directly by the processor without being interpreted.
